# EUROPEAN PATENT APPLICATION

(11) **EP 2 447 500 A1**
(43) Date of publication of application: **02.05.2012**
(21) Application number: 10791136.4
(22) Date of filing: 22.04.2010
(51) Int. Cl.: F02B 75/32, F04B 35/01, F16H 21/18

(54) **CRANK ROUND SLIDING BLOCK ASSEMBLY, AND INTERNAL COMBUSTION ENGINE AND COMPRESSOR USING THE SAME**

(30) Priority: 24.06.2009 CN 200910087606
(71) Applicant: Beijing Sinocep Engine Technology Co., Ltd, Beijing 100080 (CN)
(72) Inventor: LI, Ming, Beijing 100080 (CN); LI, Zhengzhong, Beijing 100080 (CN)
(74) Representative: Zimmermann & Partner
(86) International application number: PCT/CN2010/000554
(87) International publication number: WO 2010/148629

(57) **Abstract**

The invention provides a crankshaft-slider assembly, the crank-slider mechanism has at least spacer mounted on the crank pin, the slider end face and the structure end face of the crank are separated by the position of the spacer, such that both end are no longer opposite each other directly; the structure end face of the crank include a spindle neck end face, a crank arm end face, a ring gear or a gear segment end face and a crank end face; the spacer is referred as anti-friction plate. Preferably, the anti-friction plate is provided with oil grooves in a radial distribution, the oil grooves play oil storage roles, to improve the friction condition of the adjacent surfaces of the crank-slider mechanism. In accordance with the invention, by selecting the anti-friction plate with different thickness based on the actual size of the parts, the problems of high demand to the axial size chain accuracy of the crank pin in the crank-slider mechanism and uneasy to control are addressed; the anti-friction plate also avoid the contact between the adjacent surfaces which used to produce high-speed friction, and solve the problem of surface ablation.

## Description

### Technical Field

The invention relates to a technology of an internal combustion engine and a compressor, and more particularly, to a crankshaft-slider assembly for a reciprocating piston type internal combustion engine and a compressor. The invention also provides an internal combustion engine and a compressor comprising the crankshaft-slider assembly.

### Background

Conventional reciprocating piston type internal combustion engines, compressors or vacuumizer need to achieve the conversion between the reciprocating motion of a piston and the rotary motion of the crankshaft. Wherein, the reciprocating type internal combustion engines convert the reciprocating motion of the piston to the rotary motion of the crankshaft, while the reciprocating type compressors convert the rotary motion of the crankshaft to the reciprocating motion of the piston. Under the current general technology, the conversion process needs a crank linkage assembly. Due to the presence of link rods in the crank linkage assembly, the machines are made bulky and heavy with a poor balance performance.

To address these problems, a Chinese patent CN85100358B discloses a "crank-slider reciprocating piston type internal combustion engine", a Chinese patent CN1144879A protects a "crank-double-slider reciprocating piston type internal combustion engine", a Chinese patent CN1144880A protects a "crank-multi-slider reciprocating piston type internal combustion engine". The common features of the internal combustion engine are complete improvements to the crank linkage assembly of the internal combustion engine under the common technology by using a slider with an eccentric hole to replace the link rod. The eccentric slider has a cylindrical shape, and has an eccentric round hole parallel to the axis of the cylinder; the eccentric round hole is for passing through the crank pin of the crankshaft. The piston of the internal combustion engine comprises a crown and a guiding portion, wherein the guiding portion has a round hole. The inner radial surface of the round hole mates with the outer radial surface of the slider, wherein the slider is placed in the round hole. When the piston moves reciprocally in the cylinder by the push caused by the combustion gas in the cylinder, the eccentric slider rotates around its own center, and in turn brings a reverse rotation of the crankshaft, and thus converse the reciprocating motion of the piston into the rotary motion of the crankshaft, then the power is transmitted outward by the rotating components connected with the crankshaft. The teaching of above mentioned patents can also be applied to the compressors, to obtain crank-slider compressors.

With the crankshaft-slider assembly, the volume of the internal combustion engines or the compressors can be effectively reduced and can enable the assembly to achieve the desired balancing effect, wherein the side pressure between the piston and the cylinder can be greatly reduced.

However, in the practical use, the crank-slider mechanism also revealed some significant disadvantages. One problem is the high demand to the axial size chain accuracy of the crank pin. In axial direction of the crank pin, there should be an appropriate axial clearance between the opposite faces of the various components, if not, it can not rotate. However, if the clearance is too large, the compactness of the whole assembly and the stiffness of the shaft set will be reduced, and the whole assembly will not functioning properly. The demands to the size chain lay a very high demand to the machining accuracy and assembly accuracy of the crank and the slider, and it is very difficult to achieve.

Another serious problem is that the end face of the slider is prone to ablation, the crank end face and the crankshaft arm end face opposite to the slider end face are also prone to this phenomenon. Through analysis, the problem is caused by the movement features of the crank-slider mechanism, the slider and the crankshaft rotate at the same speed in the opposite direction during the movement of the crank-slider mechanism, so the relative speed between the two components is twice of the speed of the crankshaft. The current maximum speed of the engine is generally around 6,000 rpm, so that the relative velocity between the crankshaft and the slider is twice as the speed of the engine, which can reach 12,000 rpm. In the design of the crank-slider mechanism, the slider is placed in the slider receiving hole of the piston guiding portion; there is a certain axial movement. And, in order to reduce the overall size of the mechanism, the distance between the slider and the crank arm or the crank are very close. Thus, in the process of high-speed operation, there will be occasional frictions between the end face of the slider and the opposite crank end face or the crank arm end face, and due to the relative speed between the slider and the crank which is very large, this friction will cause great damages to both element being in friction with each other, and also cause surface ablations, and a very large friction losses of the mechanism movement.

The problem has not yet been reliably resolved in the existing technologies. If the distances between the slider and the crank arm or the crank end face are increased, the compactness of the whole mechanism will be lower. The limit to axial movement of the slider may cause the slider to rotate abnormally. Therefore, the above two solutions are not optimum solutions.

### Summary

To address these problems, the technical problem for the present invention to be solved is to provide a crank-slider assembly, wherein the assembly can solve the ablation problem of between the slider end face and the surfaces of the opposite crank and the crankshaft better, and the assembly can adjust the axial clearance of the shaft flexibly.

The invention provides a crankshaft-slider assembly, comprising a crankshaft and a slider or a slider group fit over the crank pin of the crankshaft, **characterized in that** at least one spacer is mounted on the crank pin, the said at least one spacer is adjoined by the axial extreme side of the slider or the outer axial extreme side of the slider group.

Preferably, the said at least one spacer is two spacers, which are respectively adjoined by the opposite axial extreme side of the slider or the opposite outer axial extreme side of the slider group.

Preferably, the thickness of at least one of the said spacers is determined in accordance with the axial size chain.

Preferably, the inner hole diameter of the spacer is somewhat larger than the outer diameter of the crank pin, and can play axially after mounting.

Preferably, the spacer is made by the spring steel or other material with high hardness.

Preferably, the structure end face opposite to the spacer is processed by means of thermal treatment and other process enhancing the surface hardness thereof.

Preferably, the spacer is made of copper.

Preferably, the side of the spacer is provided with oil grooves.

Preferably, the spacer is drilled with 2-6 axial oil holes thereon.

Preferably, the slider or the slider group is provided on the axial extreme side opposite to the spacer with one or several oil grooves.

Preferably, the structural extreme side of the crank opposite to the spacer is provided with one or several oil grooves.

Preferably, the oil grooves on the same extreme side are arranged radially from center to outside.

Preferably, the oil groves on the same end face of the spacers are evenly disposed circumferentially.

Preferably, the internal combustion engine comprises the crankshaft-slider assembly of any one of claims 1-13.

Preferably, the compressor comprises the crankshaft-slider assembly of any one of claims 1-13.

The invention provides a crankshaft-slider assembly, the thickness of the anti-friction plate can be flexibly selected as needed, the axial size chain can be adjust properly by the anti-friction plate, such that the axial clearance of various parts can be controlled to the suitable condition. This will enable the design of axial parts very flexible, reduce the demand to its manufacturing accuracy. The manufacture and selection of the anti-friction plate are very simple, will not increase the difficulty of manufacturing and assembly. In addition, the structure end face of the crankshaft and the end face of the slider which used to opposite each other directly are separated by providing the wearing reducing plate on appropriated location of the crank pin of the crankshaft, such that the slider will not contact with the structure end face of the crankshaft smooth with high-speed friction occurrence, reduce the possibility of the ablation of the slider or the structure end face of the crankshaft. In the preferred embodiment of the invention, the inner hole diameter of the wearing reducing plate is made slightly larger than the diameter of the crank pin, such that it can be provided on the crank pin and ran in axial direction flexibly. In this way, when the crankshaft-slider assembly is operating, the speed of the wearing reducing plate will not be the same as that of the crankshaft, but move at a much lower speed, such that when there are frictions between the wearing reducing plate and the structure end face of the crankshaft or the slider, the relative speed can be greatly reduced, effectively prevent the occurrence of the surface ablation caused by the relatively high speed friction.

In the further preferred embodiment of the invention, the surface of the wearing reducing plate is provided with oil grooves or holes, the oil grooves have the function that can effectively store the oil, such that the frictions between the wearing reducing plate and the end face of the crank or the structure end face of the crankshaft are lubricated, can also effectively reduce the surface ablation caused by the relatively high friction and friction losses.

### Brief Description of the Drawings

Figure 1 is a diagrammatic view of a crankshaft-slider assembly of the crank-slider mechanism provided according to a first embodiment of this invention;
Figure 2 is an elevation view of a wearing reducing plate of the crankshaft-slider assembly of the crank-slider mechanism provided according to a first embodiment of this invention;
Figure 3 is a diagrammatic view of a crankshaft-slider assembly of the crank-slider mechanism provided according to a second embodiment of this invention;
Figure 4 is a diagrammatic view of a crankshaft-slider assembly of the crank-slider mechanism provided according to a third embodiment of this invention;
Figure 5 is a diagrammatic view of a crankshaft-slider assembly of the crank-slider mechanism provided according to a fourth embodiment of this invention.

### Detailed Description

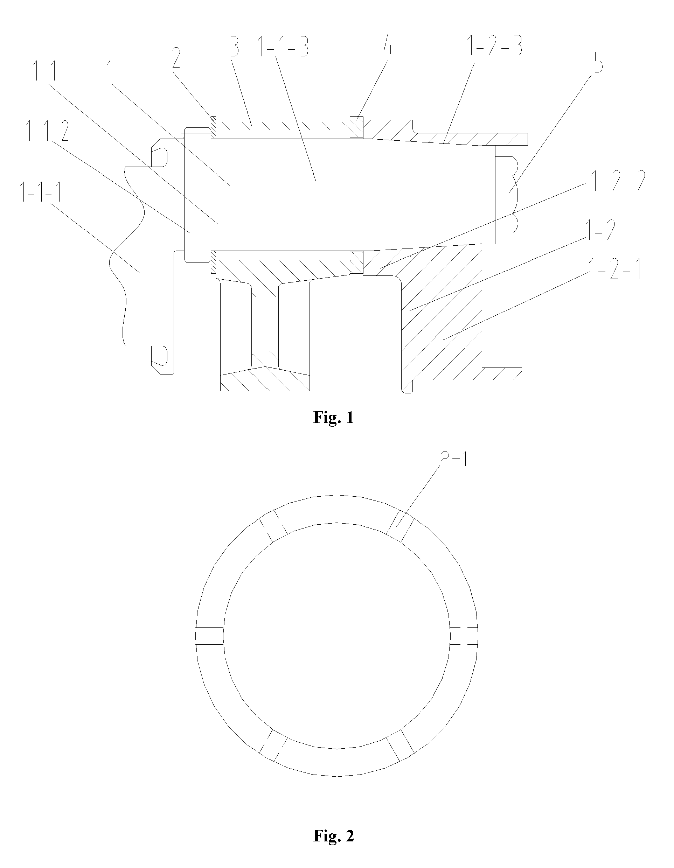

The first embodiment of the present invention provides a single slider type crank-slider mechanism. Referring to Figure 1, the Figure shows the partial diagrammatic view of the crank-slider mechanism. The crank-slider mechanism basically includes a crankshaft, a slider and a piston. Since the piston has little relationship with the present invention, therefore, the piston is not shown in the diagrammatic view, and the portion of the crankshaft and the slider are shown only, which can be called a crankshaft-slider assembly of the crank-slider mechanism.

Figure 1 shows the partial diagrammatic view of the crank-slider mechanism, the crankshaft-slider assembly includes a crankshaft 1, a first wearing reducing plate 2, a slider 3, a second wearing reducing plate 4 and a crank bolt 5.

The crankshaft 1 is a modular crankshaft, including a single throw 1-1 and a crank1-2 made independently and connected integrally by a connecting structure, to form a complete crankshaft

The single throw 1-1 includes two parts such as a single throw main journal 1-1-1, a crank pin 1-1-3, etc. which are connected axially in series. The single throw main journal 1-1-1 is on one end of the single throw 1-1, wherein the single throw main journal 1-1-1 and the main journal of the crank 1-2 support the modular crankshaft together, to provide the modular crankshaft with a rotation axis. The crank pin 1-1-3 is cylindrical, the diameter of which is smaller than the single throw main jounal1-1-1, protrude vertically from the outer end face of the single throw main journal 1-1-1, the axis of which offsets on one side relative to the axis of the single throw main journal 1-1-1, and the protruding front end has a taper. A teeth segment (or ring) 1-1-2 is provided at the root position of crank pin 1-1-3 near the single throw main journal 1-1-1. The teeth segment 1-1-2 is used to overcome the live point (kinematic singularity). In the related patent documents of the Chinese patent CN85100359A and other related patent documents, this has been published. No description in detail herein.

The crank 1-2 includes a crank main journal 1-2-1, a boss 1-2-2 and a crank hole 1-2-3 provided on the crank. The crank main journal 1-2-1 and the single throw main journal 1-1-1 together constitute the rotation supporting shaft of the crankshaft. The axis of the crank hole 1-2-3 is parallel to the axis of the crank main journal 1-2-1 and offset on one side, wherein the crank hole 1-2-3 is a tapered hole, the taper of which mates with the taper of the front end of the crank pin 1-1-3. The boss 1-2-2 is a protrusion portion provided at the location of the larger-diameter end of the crank hole 1-2-3. To provide a connection between the crank1-2 and the single throw 1-1, first insert the crank pin 1-1-3 into the crank hole1-2-3, with the tapers cooperating with each other, make them closely join together, and then use the crank bolt 5 to secure them together. To this end, an axial thread is provided on the tapered end face of the crank pins 1-1-3, while a sink hole is provided on the outer end face of the crank 1-2 to support the crank bolt 5. Because the above connection structure has been applied by applicant and is not the key point of this application, no further description will be provided in detail herein.

After the assembling of the crankshaft parts to form a complete crankshaft, the crankshaft has several end faces perpendicular to the crankshaft axis and formed by the geometry of the various parts of the crankshaft, known as the structure end faces of the crankshaft, including the crank end face, teeth segment end face. When use of the crankshaft in which the crank arm is provided on the main journal, the structure end face of the crankshaft further comprises a crank arm end face. In the absence of the teeth segment, the end structure end face of the crank can be main journal end face.

The first wearing reducing plate 2 and the second wearing reducing plate 4 are both thin spacers with inner holes and are collectively referred to as wearing reducing plate. Figure 2 is a schematic view of the wearing reducing plate. The inner diameter of the wear reduction plate is slightly larger than the crank pin 1-1-3 of the crankshaft 1, the outline dimension can be selected properly, not too large, to avoid affecting the arrangement of the crank-slider assembly. The thickness of the wearing reducing plate needs to be adjusted based on the axial size chain, wherein the thickness is selected as needed to achieve axial position adjustment of the part assembly. Therefore the plate is also called a shim. To be able to store oil to improve the state of friction, the oil grooves 2-1 are provided on the end face of the wearing reducing plate in such a manner that they are arranged radially outward from the center. The oil grooves on the same end face are arranged uniformly along the perimeter. Note that, the inner diameter of the wearing reducing plate should be slightly larger than the outer diameter of the crank pin 1-13 of the crankshaft 1 to ensure the reliable abutment of the wearing reducing plate against the structure end face of the crankshaft. The wearing reducing plate is made by spring steel or other materials with larger hardness to make them more resistant. Also, the wearing reducing plate can also be made of copper, which, due to the softness of the copper, can damage those end faces slightly during the friction between the copper wearing reducing plate and adjoining end face. However the spacer made of copper itself can also readily worn due to its nature of softness, even finally come to a rupture. As a result, the selection of materials with high hardness or copper and the like with softness needs to be determined according to the particular requirements.

The wearing reducing plate in the same level can optionally be formed by combination of two or more thin wearing reducing plates. Thus the clearance can be adjusted by a suitable amount of wearing reducing plate as required. However this solution causes the wearing reducing plate to become too thin and hence come to a rupture during the high rotation since the adjustable clearance prepared for the wearing reducing plate is usally quite small. Consequently the solution is not the preferable one.

The slider 3 is essentially the same with the existing technology, no further description in detail. A number of divergent oil grooves are provided on the end face of the slider 3 and abut against the wearing reducing plate to store oil.

Each of these components forms the rank-slider assembly together. The assembly process of the crankshaft-slider assembly is that, first, the first anti-friction plate 2 is placed on the crank pin 1-1-3, such that it abut against the end face of the teeth segment 1-1-2, and then the crank pin 1-1-3 is inserted into the through hole of the slider 3 (assuming that the slider 3 has been installed in the slider receiving hole of the piston ), and the end face of the slider 3 is abutted against the outer side end face of the first anti-friction plate 2. Then, the second wearing reducing plate 4 is placed, the second wearing reducing plate 4 is abutted against the end face of the slider 3, and finally, the crank 1-2 is secured to the crank pin 1-1-3 by the cooperation of the tapered surfaces of the crank hole 1-2-3 and the front end of the crank pin 1-1-3, and is tightened by the crank bolt 5. Such a crankshaft-slider assembly has been finished. Note that, the first wearing reducing plate 2 plays a role of the adjustment shim, wherein the thickness of the wearing reducing plate can be selected based on the need of the aixal size chain and the situation of specific assembly, so that the axial tighten degree of the crankshaft-slider assembly is suitable after assembly, so that all the surface contacted with each other will not be squeezed too tight in the axial direction to cause the rotation of the slider 3 inflexibly; also not too loose to lower the compactness of the structure.

During the movement of the crank-slider mechanism, because of the isolation effect of the wearing reducing plate, the crankshaft-slider assembly prevents the end face of the slider close to the teeth segment 1-1-2 in the crankshaft-slider assembly from frictional contact with the end face of the teeth segment 1-1-2 directly, and prevent another end face thereof from frictional contact with the end face of the crank 1-2 directly. With in the middle position, the wearing reducing plate can be friction with the structure end face of the crankshaft or the end face of the slider which it abut against. Since the wearing reducing plate is provided over the crank pin 1-1-3 loosely, it can not operate with the same speed as the crankshaft, but rotate at a much more lower rotational speed than the speed of the crankshaft. Whether the wearing reducing plate is friction with the structure end face of the crankshaft or the end face of the slider, the relative running speed are low, reducing the possibility of the ablation caused by high speed friction. The friction losses during the movement are also reduced. In addition, the oil grooves are provided on the end face of the wearing reducing plate, the oil grooves can keep the oil or grease kept on the end face, when there are frictions between the wearing reducing plate and the structure end face of the crankshaft or the end face of the slider, wherein the oil or grease can reduce the ablation and the damage caused by the friction.

To further reduce the damage caused by the relative friction, the structure end face of the crankshaft adjacent to the wearing reducing plate can be heat treated correspondingly to improve hardness thereof.

The first embodiment provides a crankshaft-slider assembly with a single slider, and in fact, the idea of the embodiment can also be applied to the application of double sliders and multi-sliders, and etc. The Second embodiment of the invention provides an example of double sliders.

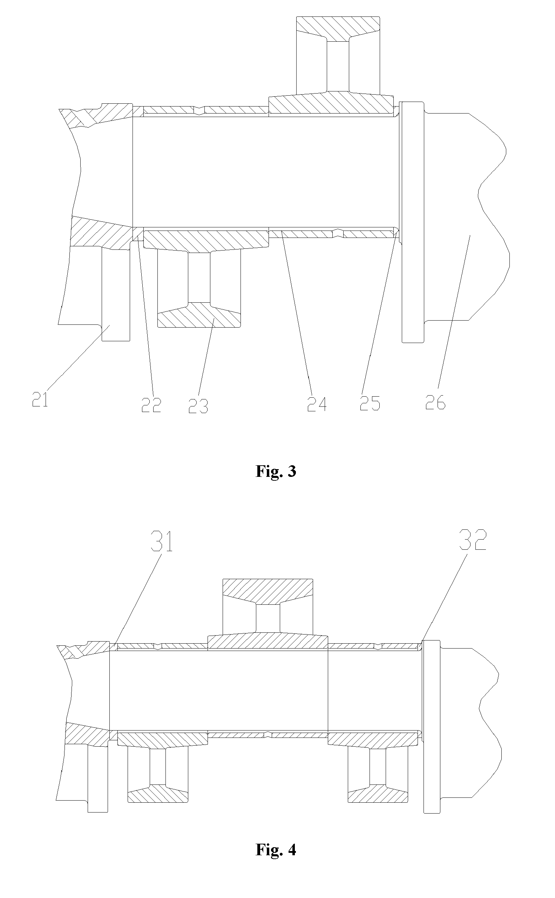

Refer to Figure 3, the figure shows a crankshaft-slider assembly with double sliders provided in accordance with the second embodiment of this invention, the working principle of the assembly has been explained in the Chinese patent CN1144879A. The difference in the embodiment is the wearing reducing plates, i.e. the first wearing reducing plate 22 and the second wearing reducing plate 25 are provided on the both ends of the double slider assembly respectively on the crank pin. The left side end face of the first slider 23 and the right side end face of the crank 21 are separated by the first wearing reducing plate 22. The right side end face of the second slider 24 and the end face of the crank arm of the crankshaft 26 are separated by the second reducing plate 25. One or two of the wearing reducing plates can be used as adjustment shims, to select the wearing reducing plate of suitable thickness based on the specific condition of the axial clearance during the assembly, and to control the axial size chain of the crank pin conveniently, such that there are suitable axial clearances between the adjacent components. The provision manner, structure and like of the wearing reducing plate are basically the same as that of the first embodiment, and is not repeated here. Since the two sliders are secured integrally, the adj acent end faces of the sliders do not friction each other, so that there is no need to install the wearing reducing plate between the sliders. One slider of the two sliders is mounted in the slider receiving hole of the piston of the crank-slider mechanism, while the other is mounted in the slider receiving hole of the motion balancing slider of the crank-slider mechanism. When the crank-slider mechanism is operating, the movement direction of the slider is set opposite to the movement of the crankshaft, because the wearing reducing plate is provided over the crank loosely, the rotation speed thereof is far less than the rotation speed of the crankshaft, such that the relative speed between the wearing reducing plate and the end face of the slider is far less the relative speed between the crankshaft and the slider, when there is friction between the slider and the wearing reducing plate, as the lower relative speed, the possibility of the ablation is reduced, and the friction losses are also reduced. Further, by providing the oil grooves on the wearing reducing plate, the end face of the sliders and the structure end face of the crankshaft, the surfaces of the end face, on which the frictions may occur during operation, can be covered with lubricant, reducing friction losses. In addition, the wearing reducing plate can be made of spring steel treated by quench method or other materials with larger hardness, the end faces of the slider or the crankshaft opposite to the wearing reducing plate can be treated by special heat treatment or surface treatment to increase the hardness, and further prevent the occurrence of the ablation.

Figure 4 shows a crankshaft-slider assembly mounted with three sliders provided in accordance with the third embodiment of this invention and are the same as the second embodiment. The wearing reducing plates are provided on the crank pins at the both ends of the slider set, i.e. the first wearing reducing plate 31 and the second wearing reducing plate 32, one of the two wearing reducing plates is used as the adjustment spacer. The provision manner, the structure and the working principle of the two wearing reducing plates are basically the same as that of above mentioned two embodiments, and are not repeated here.

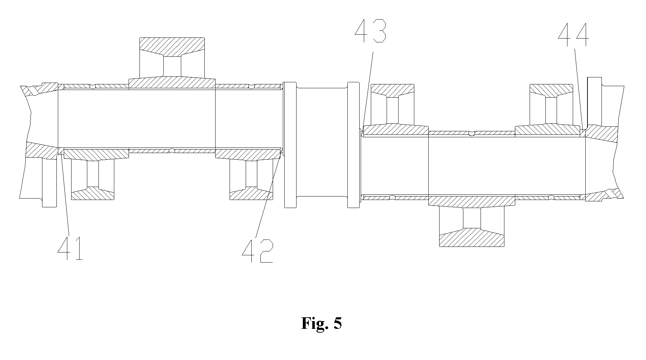

Figure 5 shows a crankshaft-slider assembly having more sliders in accordance with the fourth embodiment of the invention. The crankshaft-slider assembly is used for eight cylinders engine, wherein the assembly has six sliders in total, and these sliders are divided into two groups, and each group has three sliders. The crankshaft has a double throw, i.e. the crankshaft element formed by providing a crank pin on the both end faces of the main journal respectively. When the crankshaft-slider assembly is combined, three sliders are provided on each crank pin, i.e. a group of slider set. Since the both ends of each slider set can be friction with the structure end face of the crankshaft, so, in the crankshaft-slider assembly, there will be four structure end faces of the crankshaft in friction with the slider, and the wearing reducing plates will be placed at these four locations, wherein the specific location will be at the both ends of the each slider set. Figure 5 shows from left to right the first wearing reducing plate 41, the second wearing reducing plate 42, the third wearing reducing plate 43 and the fourth wearing reducing plate 44. The wearing reducing plates have the roles of axial run adjustments by the selection of the thickness thereof.

In the above mentioned embodiments, both ends of the sliders or the slider set have mounted with the wearing reducing plates, and in fact, it does not exclude the situation that the wearing reducing plate is only mounted on one end of the sliders or the slider set. At this time, the effect of reducing the ablation can be only obtained at the end which the wearing reducing plate is mounted to.

In addition, in condition of the demand not so high, the oil grooves can be replaced by the oil holes provided on the wearing reducing plate, the oil holes are through holes passing through the wearing reducing plates, and also play the oil storage role.

By applying the crankshaft-slider assembly mounted with the wearing reducing plate to an internal combustion engine, one can obtain the internal combustion engine utilizing the crankshaft-slider assembly.

By applying the crankshaft-slider assembly mounted with the wearing reducing plate to a compressor, one can obtain the compressor utilizing the crankshaft-slider assembly.

The above mentioned is only the preferred embodiments of the present invention, it should be noted that the skilled in the art can also make may improvements and modifications without departure from the basic principle of the present invention, these improvements and modifications will be also be considered as the protections scope of the invention.

## Claims

1. A crankshaft-slider assembly, comprising a crankshaft and a slider or a slider group fit over the crank pin of the crankshaft, **characterized in that** at least one spacer is mounted on the crank pin, the said at least one spacer is adjoined by the axial extreme side of the slider or the outer axial extreme side of the slider group.

2. The crankshaft-slider assembly of claim 1, **characterized in that** the said at least one spacer is two spacers, which are respectively adjoined by the opposite axial extreme side of the slider or the opposite outer axial extreme side of the slider group.

3. The crankshaft-slider assembly of claim 1 or 2, **characterized in that** the thickness of at least one of the said spacers is determined in accordance with the axial size chain.

4. The crankshaft-slider assembly of claim 1, **characterized in that** the inner hole diameter of the spacer is somewhat larger than the outer diameter of the crank pin, and can play axially after mounting.

5. The crankshaft-slider assembly of claim 1, **characterized in that** the spacer is made by the spring steel or other material with high hardness.

6. The crankshaft-slider assembly of claim 5, **characterized in that** the structure end face opposite to the spacer is processed by means of thermal treatment and other process enhancing the surface hardness thereof.

7. The crankshaft-slider assembly of claim 1, **characterized in that** the spacer is made of copper.

8. The crankshaft-slider assembly of claim 1, **characterized in that** the side of the spacer is practiced with oil grooves.

9. The crankshaft-slider assembly of claim 1, **characterized in that** the spacer is drilled with 2-6 axial oil holes thereon.

10. The crankshaft-slider assembly of claim 1, **characterized in that**, the slider or the slider group is provided on the axial extreme side opposite to the spacer with one or several oil grooves.

11. The crankshaft-slider assembly of any one of claim 1, **characterized in that** the the structural extreme side of the crank opposite to the spacer is provided with one or several oil grooves.

12. The crankshaft-slider assembly of claim 8, 10 or 11, **characterized in that** the oil grooves on the same extreme side are arranged radially from center to outside.

13. The crankshaft-slider assembly of claim 12, **characterized in that** the oil groves on the same end face of the spacers are evenly disposed circumferentially.

14. An internal combustion engine, **characterized in that** the internal combustion engine comprises the crankshaft-slider assembly of any one of claims 1-13.

15. A compressor, **characterized in that** the compressor comprises the crankshaft-slider assembly of any one of claims 1-13.
